# EUROPEAN PATENT APPLICATION

(11) **EP 4 803 740 A1**
(43) Date of publication of application: **09.09.2026**
(21) Application number: 24885243.6
(22) Date of filing: 09.08.2024
(51) Int. Cl.: F03D 13/25, B63B 35/00, B63B 77/10

(54) **METHOD FOR CONSTRUCTING FLOATING WIND POWER GENERATION EQUIPMENT**

(30) Priority: 30.10.2023 JP 2023185508
(71) Applicant: Sumitomo Mitsui Construction Co., Ltd., Tokyo 104-0051 (JP)
(72) Inventor: KASUGA Akio, Tokyo 104-0051 (JP)
(74) Representative: Ipsilon Luxembourg
(86) International application number: PCT/JP2024/028684
(87) International publication number: WO 2025/094466

(57) **Abstract**

An object of the present invention is to provide a construction method for a floating wind power generation facility which is less susceptible to wind and waves when towing. A provisional assembly (1a) is assembled on land. The provisional assembly (1a) includes a base part (8) of a floating body (2) and a provisionally mounted member (6, 13, 16) disposed at a position different from a position at completion. After assembly of the provisional assembly (1a), the provisional assembly (1a) is launched. After being launched, the floating wind power generation facility under construction is towed to its installation position, and the provisionally mounted member (6, 13, 16) is disposed at the position at completion. Since the provisional assembly (1a) is shorter in length in the up-down direction than the completed floating wind power generation facility, the provisional assembly (1a) is less susceptible to wind and waves when towed.

## Description

### TECHNICAL FIELD

The present invention relates to a construction method for a floating wind power generation facility.

### BACKGROUND ART

Wind power generation is a means for generating electricity using renewable energy. A floating wind power generation facility can be installed in deep water areas where it is difficult to install a bottom-fixed offshore wind power generation facility, and thus, the area in which the floating wind power generation facility can be installed is large. For this reason, the demand for floating wind power generation is increasing.

As a construction method for a floating wind power generation facility, Patent Document 1 discloses a construction method including transporting a floating body to an offshore work area, sinking the floating body, fixing the floating body to the bottom-fixed platform provided on the seabed, mounting a tower, a nacelle, and blades to the floating body fixed on the bottom-fixed platform, and thereafter floating the floating body and towing it to an installation sea area. In this method, since the floating body is fixed to the bottom-fixed platform during assembly, the lower portion of the tower is located underwater, and the height of the tower from the water surface becomes low. Therefore, an increase in size of crane ships is suppressed.

Also, Patent Documents 2 and 3 disclose towing a main body of the floating wind power generation facility assembled on land to the installation position.

### PRIOR ART DOCUMENT(S)

### PATENT DOCUMENT(S)

Patent Document 1: JP2015-155655A
Patent Document 2: JP2016-529430A
Patent Document 3: JP2018-507135A

### SUMMARY OF THE INVENTION

### TASK TO BE ACCOMPLISHED BY THE INVENTION

However, in the method described in Patent Document 1, though the increase in size of the crane ship is suppressed, it is necessary to install the bottom-fixed platform and to fix and release the floating body to and from the bottom-fixed platform work at the seabed, and these contributed to an increase in costs. Also, during towing from the offshore work area to the installation area, the facility is almost complete and has a large height, the influence of wind and waves is significant.

In the method described in Patent Documents 2 and 3, since the main body of the floating wind power generation facility that has been substantially complete and has a large height is towed, the influence of wind and waves is significant. Also, in the method described in Patent Documents 2 and 3, if it is attempted to install some members offshore to reduce the influence of wind and waves, large crane ships are necessary.

In view of the foregoing background, an object of the present invention is to provide a construction method for a floating wind power generation facility which is less susceptible to wind and waves when towing. In one aspect of the present invention, it is further aimed to provide a construction method for a floating wind power generation facility which can construct a high tower without using a large crane ship.

### MEANS TO ACCOMPLISH THE TASK

To achieve the above object, one aspect of the present invention is a construction method for a floating wind power generation facility (1) provided with a floating body (2) including a base part (8), a tower (3) mounted on the base part, a nacelle (4) mounted to an upper end portion of the tower, a hub (5) mounted to the nacelle to be rotatable about a rotor axis (X), and multiple blades (6) mounted to the hub, the construction method comprising: a provisional arrangement step of assembling, on land, a provisional assembly (1a) which includes the base part and at least one provisionally mounted member (6, 13, 16) constituting a part of the floating wind power generation facility, such that the provisionally mounted member is disposed at a position closer to the base part than a position at completion; a launching step of launching the provisional assembly; and a final arrangement step of, after the launching step, towing the floating wind power generation facility under construction to an installation position thereof and disposing the provisionally mounted member at the position at completion. Preferably, the floating body (2) further includes an underwater part (9) extending downward from the base part (8), the tower (3) includes a tower lower portion (15) mounted on the base part (8) and a tower upper portion (16), and the provisionally mounted member includes a lower end portion (13) of the underwater part, the tower upper portion (16), and/or the blades (6).

According to this aspect, since the floating wind power generation facility in a provisional arrangement state has a shorter length in the up-down direction than in the completed state, the influence of wind and waves during towing is reduced.

In the above aspect, the provisional assembly (1a) assembled in the provisional arrangement step may include the base part (8), the underwater part (9), the tower lower portion (15), the tower upper portion (16), the nacelle (4), the hub (5), and the blades (6).

To mount major members with heavy weight offshore, a large crane ship would be necessary, but according to this configuration, the major members are attached to each other on land, and thus, there is no need to use a large crane ship.

In the above aspect, the provisionally mounted member may include the multiple blades (6), the provisional arrangement step may include detachably attaching the multiple blades to the tower such that one end portions thereof to be mounted to the hub (5) face upward and are offset from each other in a circumferential direction with respect to a tower axis (Z), which is a central axis of the tower (3) extending in an up-down direction, mounting the hub to the nacelle (4), and mounting the nacelle to an upper end portion of the tower upper portion (16) via a support member (20) configured to make the nacelle rotatable about the tower axis, and the final arrangement step may include sequentially aligning and mounting each of the blades to a part of the hub where the blade is to be mounted by rotating the hub about the rotor axis (X) and rotating the nacelle about the tower axis.

According to this aspect, due to the support member, the parts of the hub where the blades are to be mounted can be brought close to the blades, and thus, the blades can be mounted easily.

In the above aspect, the support member (20) may be configured to make the nacelle (4) tiltable about a tilting axis (Y) perpendicular to the tower axis (Z) and the rotor axis (X) within a predetermined range.

According to this aspect, due to the support member, the nacelle can be tilted about the tilting axis, and thus, the blades can be brought close to the tower at the time of maintenance, whereby the maintenance of the blades becomes easy.

In the above aspect, the provisionally mounted member may include the lower end portion (13) of the underwater part (9), the provisional arrangement step may include temporarily fixing the underwater part to the base part (8), and the final arrangement step may include releasing temporary fixation of the underwater part to the base part and moving the underwater part downward.

According to this aspect, since the underwater part is positioned higher in the onshore work than the position at completion, the amount of ground excavation for forming a groove or a hole to receive the underwater part can be reduced, and the provisional assembly becomes stable so that launching thereof becomes easy. Also, the provisional assembly can be launched in an area where the water depth is shallow, and thus, in a case where there are transportation regulations regarding the vertical dimensions below the water surface for facilities to be launched, it is possible to comply with those regulations.

In the above aspect, the tower lower portion (15) may include at least three legs (17) mounted on the base part (8) and supporting the tower upper portion (16) at upper end portions thereof, the tower upper portion may be disposed at a center of the at least three legs in plan view and may be configured to be supported at a lower end portion thereof by the upper end portions of the at least three legs at completion, the provisionally mounted member may further include the tower upper portion, the provisional arrangement step may include placing the tower upper portion on an upper end portion of the underwater part (9) such that an outer peripheral surface of an intermediate portion thereof in an up-down direction contacts or faces the upper end portions of the at least three legs, and the final arrangement step may include moving the tower upper portion upward.

According to this aspect, at the time of launch, the tower upper portion is placed on the underwater part, and thus, the tower upper portion becomes stable.

In the above aspect, the final arrangement step may further include towing the floating wind power generation facility under construction to the installation position after downward movement of the underwater part (9) and before upward movement of the tower upper portion.

According to this aspect, when being towed to the installation point, the floating wind power generation facility has a lower height from the base part than at completion, and thus, it becomes less susceptible to the influence of wind and waves.

In the above aspect, the provisional arrangement step may include mounting a temporary ring member (25) extending in a circumferential direction with respect to a tower axis (Z), which is a central axis of the tower (3) extending in an up-down direction, to upper ends of the legs (17), disposing a lifting cable (23) passing under the tower upper portion (16), and mounting a lifting device (24) configured to pull up the lifting cable to the temporary ring member, and upward movement of the tower upper portion in the final arrangement step may be performed by pulling up the lifting cable supporting a bottom portion of the tower upper portion with the lifting device (24).

According to this aspect, since the tower upper portion can be moved upward with the lifting cable and the lifting device provided on the upper end portions of the legs, there is no need to use a crane ship for the upward movement of the tower upper portion. Also, conventionally, the upper limit of the height of the tower was determined by the height of the crane of the crane ship, but according to this aspect, the height of the tower can be determined without such restrictions.

In the above aspect, the underwater part (9) may include a rod part (12) extending downward from the base part (8) and a mass part (13) constituting the lower end portion of the underwater part, connected to a lower end portion of the rod part, and having a diameter larger than a diameter of the rod part.

According to this aspect, since the rod part is thinner than the mass part, even if the rod part is disposed to protrude upward from the base part (8) in the floating wind power generation facility in the provisional arrangement state, it does not interfere with the arrangement of other members.

### EFFECT OF THE INVENTION

According to the foregoing aspect, a construction method for a floating wind power generation facility which is less susceptible to wind and waves when towing can be provided.

### BRIEF DESCRIPTION OF THE DRAWINGS

[Figure 1] A side view of a main part of a floating wind power generation facility according to an embodiment.
[Figure 2] A perspective view of a part of the floating wind power generation facility according to the embodiment.
[Figure 3] An explanatory diagram showing a construction method for the floating wind power generation facility according to the embodiment (onshore work).
[Figure 4] A sectional view taken along line IV-IV in Figure 3.
[Figure 5] An explanatory diagram showing the construction method for the floating wind power generation facility according to the embodiment (after being launched).
[Figure 6] An explanatory diagram showing the construction method for the floating wind power generation facility according to the embodiment (towing to an installation position).
[Figure 7] An explanatory diagram showing the construction method for the floating wind power generation facility according to the embodiment (an enlarged view of a part surrounded by a two-dot chain line in Figure 6).
[Figure 8] An explanatory diagram showing the construction method for the floating wind power generation facility according to the embodiment (after deployment of the tower).

### MODE(S) FOR CARRYING OUT THE INVENTION

In the following, a floating wind power generation facility 1 according to an embodiment of the present invention and a construction method therefor will be described with reference to the drawings.

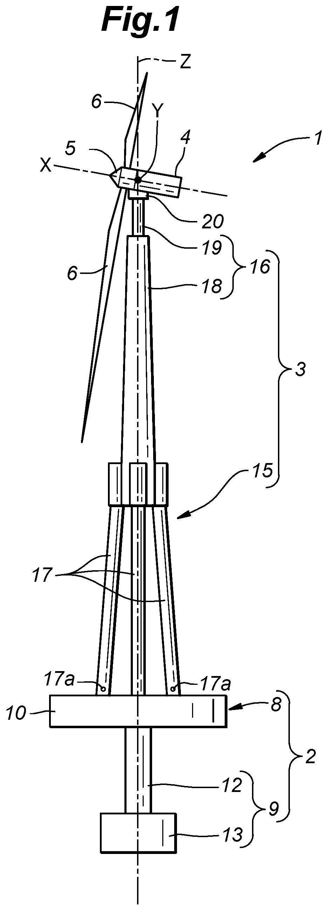

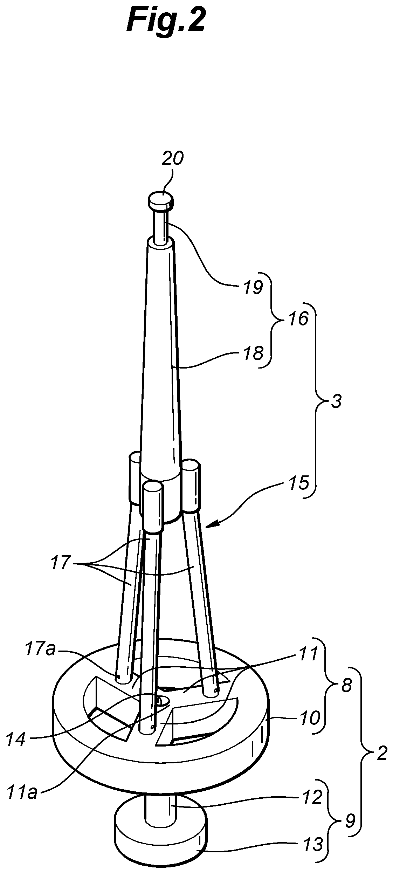

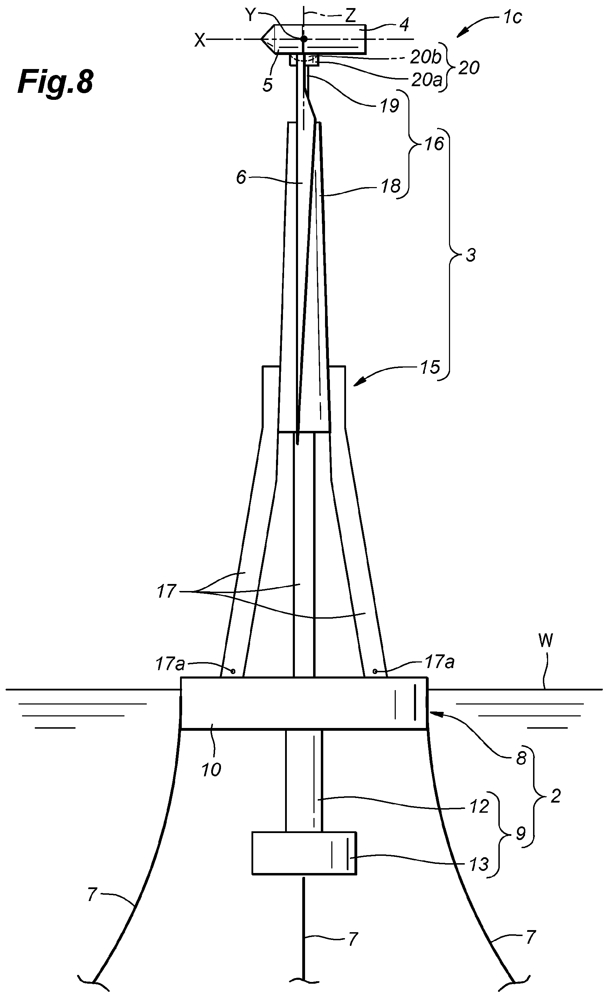

As shown in Figure 1 and Figure 2, the floating wind power generation facility 1 includes a floating body 2, a tower 3 mounted on the floating body 2, a nacelle 4 mounted to an upper end portion of an upper portion of the tower 3, a hub 5 mounted to the nacelle 4 to be rotatable about a rotor axis X, and multiple blades 6 mounted to the hub 5, and a mooring rope 7 (see Figure 8) for mooring the floating body 2 (illustration of the mooring rope 7 is omitted in Figure 1, and illustration of the nacelle 4, the hub 5, the blades 6, and the mooring rope 7 is omitted in Figure 2).

The floating body 2 includes a base part 8 and an underwater part 9 extending downward from the base part 8. The base part 8 includes a ring part 10 exhibiting an annular shape in plan view and three support parts 11 which extend radially inward from an inner peripheral surface of the ring part 10 at positions circumferentially offset from each other by 120° and are joined to each other at the center of the ring part 10. Preferably, each of the upper surface and the lower surface of the base part 8 is flush between the ring part 10 and the support parts 11. The underwater part 9 includes a rod part 12 extending downward from the central part 11a, to which the three support parts 11 are joined, and exhibiting a cylindrical shape and a mass part 13 joined to the lower end of the rod part 12 and exhibiting a bottomed cylindrical shape. The axis of the rod part 12 and the mass part 13 in the cylindrical shape coincides with a tower axis Z extending in the up-down direction to pass through the center of the ring part 10. The mass part 13 constitutes the lower end portion of the underwater part 9 and has a diameter greater than the diameter of the rod part 12 and smaller than the inner diameter of the ring part 10. The central part 11a to which the three support parts 11 are joined is provided with a through hole 14 in which the rod part 12 can be inserted. The ring part 10, the support parts 11, the rod part 12, and the mass part 13 have a hollow structure and are made of steel material, for example. The floating wind power generation facility 1 is configured such that a large part of the base part 8 and the underwater part 9 are positioned underwater in the sea, lake, or the like and the upper surface of the base part 8 is positioned slightly above the water surface W (see Figure 8).

The tower 3 includes a tower lower portion 15 supported on the base part 8 at the lower end portion thereof and a tower upper portion 16 supported on the upper end portion of the tower lower portion 15 at the lower end portion thereof.

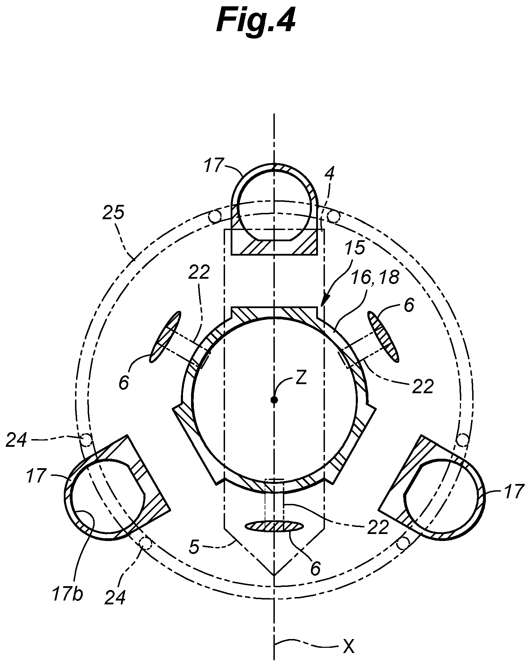

The tower lower portion 15 includes three legs 17 supported on the mutually different support parts 11 at the lower end portions thereof and inclined such that the upper end portions approach each other. Each leg 17 has a hollow structure with a hollow part 17b (see Figure 4) extending in the extension direction of the leg 17 and is made of reinforced concrete, for example. The lower end portions of the three legs 17 are disposed on one circle centered on the central part 11a in plan view and each have a pin joint 17a so that each leg 17 is supported on the support part 11 to be tiltable about an axis extending in a tangential direction of the circle.

The tower upper portion 16 includes a first upper portion 18 supported by the three legs 17 at the lower end portion thereof and a second upper portion 19 supported on the upper end portion of the first upper portion 18 at the lower end portion thereof. The tower upper portion 16 extends along the tower axis Z and is disposed at the center of the three legs 17 in plan view.

The first upper portion 18 exhibits a substantially truncated cone-shaped exterior and has a hollow structure provided with a hollow part (not shown in the drawings) extending in the up-down direction. The first upper portion 18 is made of reinforced concrete, for example. The outer peripheral surface of the lower end portion of the first upper portion 18 is in contact with the inner surface of the upper end portion of each leg 17 via a joint material (not shown in the drawings) and is fixed by a tension member (not shown in the drawings). Preferably, the part of the outer peripheral surface of the lower end portion of the first upper portion 18 and the part of the inner surface of the upper end portion of each leg 17 that are in contact with each other are each composed of a flat surface.

The second upper portion 19 exhibits a cylindrical shape and is formed of a steel pipe, for example. The hollow part of the first upper portion 18 is open at the top, and the lower end portion of the second upper portion 19 is inserted in the hollow part of the first upper portion 18 and is fixed to the first upper portion 18.

The nacelle 4 includes an electric generator configured to generate electricity by rotation of the hub 5 and the blades 6 and a speed-up gear (not shown in the drawings) and is mounted to the upper end of the second upper portion 19 via a support member 20. The support member 20 is configured to allow the nacelle 4 to rotate 360° about the tower axis Z relative to the second upper portion 19 and to tilt within a predetermined range about a tilting axis Y which is perpendicular to the rotor axis X and the tower axis Z. The support member 20 has a structure similar to that of a spherical sliding bearing, for example, and includes a concave spherical base 20a (see Figure 8) and a slider 20b (see Figure 8) configured to slide on the spherical base.

The hub 5 and the blades 6 constitute a rotor. The blades 6 receive wind and rotate about the rotor axis X together with the hub 5, the rotation is increased in speed by the speed-up gear of the nacelle 4, and the electric generator to which the rotation increased in speed is transmitted generates electricity.

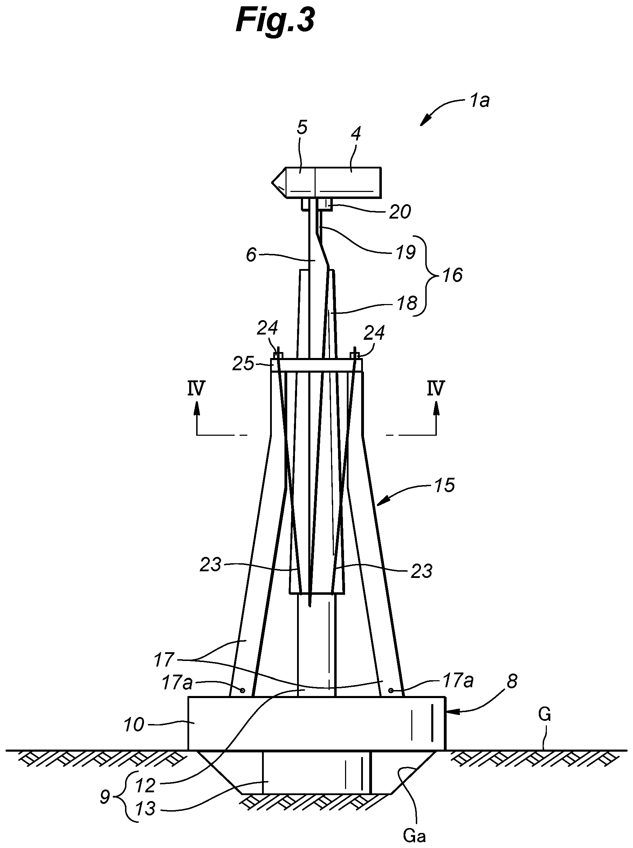

With reference to Figure 3 to Figure 8 and Figure 1, a construction method for the floating wind power generation facility 1 will be described.

As shown in Figure 3 and Figure 4, the worker assembles, on land, a provisional assembly 1a in which some members of the floating wind power generation facility 1 (see Figure 1) are temporarily disposed at positions different from the positions at completion. In the provisional assembly 1a, provisionally mounted members are disposed at positions closer to the base part 8 than the positions at completion so that the length in the up-down direction becomes shorter than that at completion. The provisionally mounted members include the mass part 13, the tower upper portion 16, and the blades 6.

As shown in Figure 3, in the provisional assembly 1a, the underwater part 9 of the floating body 2 is disposed higher than the position at completion with respect to the base part 8. The rod part 12 is inserted in the through hole 14 (see Figure 2), such that the upper portion of the rod part 12 protrudes upward from the upper surface of the base part 8, and the mass part 13 is disposed higher than the position at completion. Preferably, the upper surface of the mass part 13 contacts the lower surface of the base part 8. The underwater part 9 is temporarily fixed to the base part 8 by fasteners, wires, or the like (not shown in the drawings). When the temporary fixation is released, the underwater part 9 becomes movable downward, with the rod part 12 slidingly moving along the inner peripheral surface of the through hole 14. The base part 8 is supported on the ground G at the lower surface in the vicinity of the outer peripheral portion, and the ground G is provided with an excavated part Ga for receiving the mass part 13.

Also, as shown in Figure 3 and Figure 4, in the provisional assembly 1a, the tower upper portion 16 is disposed lower than the position at completion with respect to the tower lower portion 15, and is placed on the upper end surface of the rod part 12 which is temporarily fixed. An intermediate portion in the up-down direction of the outer peripheral surface of the first upper portion 18 of the tower upper portion 16 faces the radially inner surface of the upper end portion of each leg 17 via a predetermined gap. A temporary ring member 25 extending in the circumferential direction with respect to the tower axis Z to have an annular shape is temporarily fixed to the upper ends of the three legs 17, whereby the radially inner surface of the upper end portion of each leg 17 is maintained to be spaced from the outer peripheral surface of the tower upper portion 16. The temporary ring member 25 is a hollow steel member, for example. The provisional assembly 1a includes three lifting cables 23 disposed to pass under the bottom portion of the tower upper portion 16 and six lifting devices 24, such as jacks, mounted to the upper surface of the temporary ring member 25 and configured to pull up the lifting cables 23. The portions of the temporary ring member 25 where the lifting devices 24 are disposed are provided with through holes 25a extending in the up-down direction for insertion of the lifting cables 23. Two lifting devices 24 are provided for each leg 17 and are disposed at positions offset in the circumferential direction on opposite sides with respect to the leg 17. The two end portions of each of the three lifting cables 23 are attached to mutually different lifting devices 24 so that, when pulled up by the lifting device 24, the lifting cable 23 pushes up the bottom portion of the tower upper portion 16.

Also, in the provisional assembly 1a, each of the blades 6 is temporarily fixed to the first upper portion 18 of the tower upper portion 16 by a mounting bracket 22 or the like. The mounting bracket 22 includes, for example, a metal fitting embedded in the first upper portion 18 or wound around the outer peripheral surface of the first upper portion 18 and a metal fitting attached to the blade 6, and the blade 6 is temporarily fixed to the first upper portion 18 by fastening the two metal fittings with a fastener (not shown in the drawings) or the like. The blades 6 are disposed at positions offset from each other by about 120° and offset from the respective legs 17 by about 60° in the circumferential direction with respect to the tower axis Z. Each of the blades 6 is temporarily fixed such that one end portion to be attached to the hub 5 faces upward and is substantially aligned with or is disposed lower than the height of the lower surface of the hub 5, and the other end portion faces downward and is disposed higher than the base part 8.

The lower end portion of each leg 17 is joined to the base part 8 via the corresponding pin joint 17a as at completion, and the upper end portion of each leg 17 is temporarily fixed to the temporary ring member 25 and is disposed at substantially the same position as at completion or at a radially outer position than at completion. The second upper portion 19 of the tower upper portion 16, the support member 20, the nacelle 4, and the hub 5 are attached to the members to which they are to be directly attached (the first upper portion 18, the second upper portion 19, the support member 20, and the nacelle 4) in the same manner as at completion, but they are disposed at positions lower than at completion since the first upper portion 18 is disposed at a position lower than at completion.

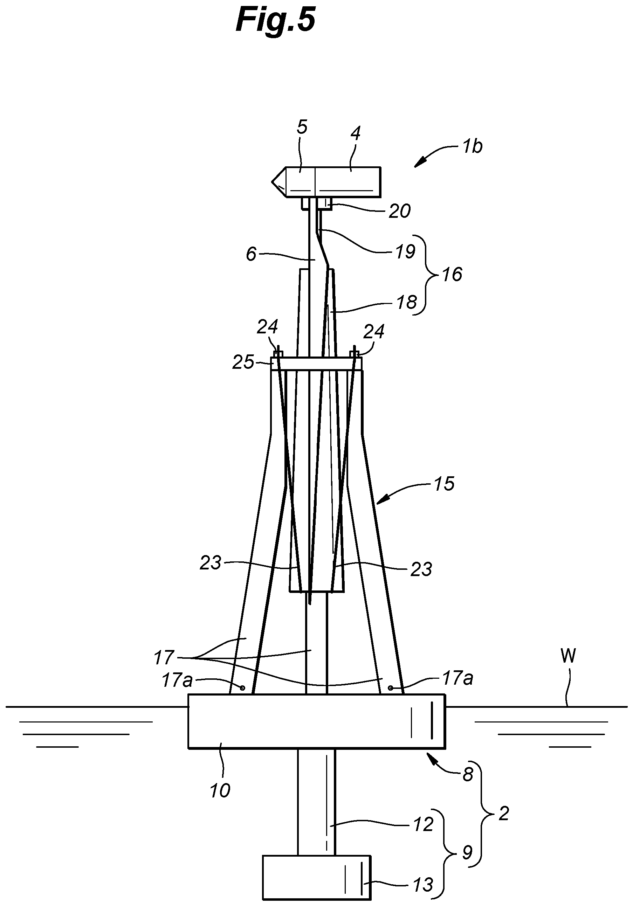

Next, the worker launches the provisional assembly 1a, tows it to a position where the water depth is deeper than the length in the up-down direction of the floating body 2, thereafter releases the temporary fixation of the underwater part 9 to move the underwater part 9 downward as shown in Figure 5, and fixes the upper end portion of the rod part 12 to the support part 11 (see Figure 2) of the base part 8 with fasteners (not shown in the drawings) or the like. By moving the underwater part 9 downward in this way, the provisional assembly 1a (see Figure 3) becomes a first expanded body 1b in which the underwater part 9 is disposed at the position at completion. At this time, the tower upper portion 16 is supported by the lifting cables 23.

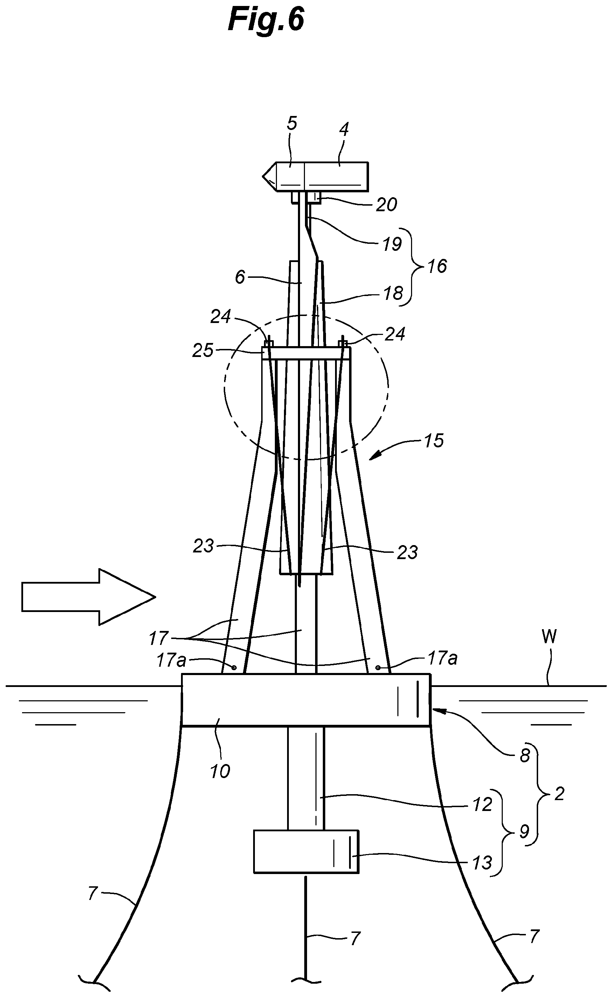

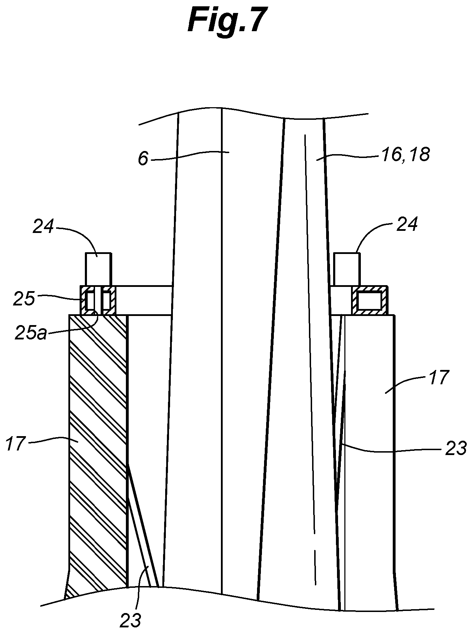

Next, the worker tows the first expanded body 1b to the installation position of the floating wind power generation facility 1 (see Figure 1), installs anchors (mooring) such as attaching mooring ropes 7 as shown in Figure 6, and further, moves the tower upper portion 16 upward to dispose it at the position at completion. As shown in Figure 7, the upward movement of the tower upper portion 16 is performed by using the lifting cables 23 supporting the bottom portion of the tower upper portion 16 and the lifting devices 24 such as jacks for pulling up the lifting cables 23. The worker pulls up the lifting cables 23 with the lifting devices 24, disposes the tower upper portion 16 at the position at completion as shown in Figure 8, and fixes the first upper portion 18 to the upper end portion of each leg 17 with a tension member (not shown in the drawings) or the like. Through such work, the first expanded body 1b (see Figure 5) becomes a second expanded body 1c in which the tower upper portion 16 is disposed at the position at completion.

Next, the worker mounts the blades 6 to the hub 5. The hub 5 is rotatable 360° about the rotor axis X, and the nacelle 4 to which the hub 5 is mounted is mounted to the tower upper portion 16 via the support member 20 and thus is rotatable 360° about the tower axis Z (see Figure 4). The worker rotates the hub 5 about the rotor axis X such that one of the parts of the hub 5 where the blades 6 are to be mounted faces downward, and further rotates the nacelle 4 about the tower axis Z such that the part is aligned in the up-down direction with one of the blades 6 temporarily fixed to the first upper portion 18. After mounting the aligned blade 6 to that part, the worker rotates the hub 5 120° about the rotor axis X and rotates the nacelle 4 120° about the tower axis Z to thereby align the second blade 6 with the part of the hub 5 where the blade 6 is to be mounted and to mount the second blade 6 to that part. Further, the worker rotates the hub 5 120° in the same direction about the rotor axis X and rotates the nacelle 4 120° in the same direction about the tower axis Z to thereby align the third blade 6 with the part of the hub 5 where the blade 6 is to be mounted and to mount the third blade 6 to that part. Thereafter, the worker rotates the nacelle 4 about the tower axis Z such that the hub 5 and the blades 6 face upwind and tilts the nacelle 4 about the tilting axis Y such that the side on which the hub 5 is mounted tilts slightly upward relative to the horizontal direction. In this way, the floating wind power generation facility 1 shown in Figure 1 is constructed.

The effects of the above-described construction method for the floating wind power generation facility 1 will be described.

As shown in Figure 3, during the onshore work, the underwater part 9 is positioned higher than the position at completion, and thus, the scale of the excavated part Ga can be reduced and the launching becomes easy. Also, since the underwater part 9 includes the rod part 12 and the mass part 13 and the rod part 12 is thinner than the mass part 13, even if the upper portion of the rod part 12 is disposed to protrude from the base part 8 in the provisional assembly 1a, it dose not interfere with the arrangement of other members such as the legs 17.

In the provisional assembly 1a, the tower upper portion 16 is placed on the upper surface of the rod part 12, and thus, the tower upper portion 16 is highly stable at the time of launch. In the provisional assembly 1a, the underwater part 9 is disposed higher than at completion, and thus, the length of the part of the provisional assembly 1a located below the base part 8 is shorter than at completion. Therefore, the provisional assembly 1a becomes stable when launched and can be launched in an area where the water depth is shallow. Also, in a case where there are transportation regulations regarding the vertical dimensions below the water surface for facilities to be launched, it is possible to comply with those regulations.

The first expanded body 1b shown in Figure 5 has a shorter height from the upper surface of the base part 8 compared to the completed floating wind power generation facility 1 (see Figure 1). Therefore, the influence of wind and waves when the first expanded body 1b is towed to the installation position is reduced.

As shown in Figure 4 and Figure 6 to Figure 8, towing to the installation position is performed in a state in which the major members are temporarily fixed to each other, and thus, there is no need to separately transport the major members. Also, the tower upper portion 16 that is temporarily fixed can be moved upward by using the lifting cables 23 and the lifting device 24 which can be arranged on the first expanded body 1b, and the blades 6 that are temporarily fixed can be mounted to the hub 5 by using the support member 20. Therefore, the floating wind power generation facility 1 (see Figure 1) can be constructed without using a crane ship or by using a relatively small crane ship even if a crane ship is used. Also, if the tower upper portion 16 is mounted by using a crane ship, the upper limit of the height of the tower 3 is determined by the height of the crane of the crane ship, but with the present method, there is no such a limit, and a higher tower 3 can be constructed.

As shown in Figure 1 and Figure 4, due to the support member 20, the nacelle 4 can rotate 360° about the tower axis Z relative to the tower upper portion 16, and thus, even if the three blades 6 are temporarily fixed at positions offset from each other by 120° to avoid the legs 17, the hub 5 can be brought close to each of the blades 6, and the blades 6 can be mounted to the hub 5 easily. Also, in general, the wind power generation facility is used in a state in which the rotor axis X is slightly tilted relative to the horizontal direction such that the hub 5 faces upward, but since the nacelle 4 is tiltable about the tilting axis Y within a predetermined range due to the support member 20, the nacelle 4 can be tilted to bring the blades 6 close to the tower upper portion 16 at the time of maintenance. Therefore, the maintenance of the blades 6 is easy.

A concrete embodiment has been described in the foregoing, but the present invention can be modified in various ways without being limited by the above embodiment and modifications. Four or more legs may be provided. The mounting of the blades to the hub may be performed before moving the tower upper portion upward from the temporary fixing position. In this case, when, after one blade is mounted to the hub, the hub is rotated about the rotor axis to mount another blade to the hub, the nacelle is preferably tilted such that the hub faces upward relative to the horizontal direction to prevent the already-mounted blade from hitting the legs. The provisionally mounted member(s) may be one or two of the mass part, the tower upper portion, and the blades, or other members such as the nacelle can be provisionally mounted members. Some members may be transported, after the launch or after the towing to the installation position, to that position and mounted there, instead of being mounted on land. The number of the lifting cables and the lifting devices may be changed. The lifting devices may be directly mounted to the legs without providing the temporary ring member. In the provisional assembly, the inner peripheral surface of the upper end portion of each leg may contact and be temporarily fixed to an intermediate portion in the up-down direction of the outer peripheral surface of the tower upper portion, and the temporary fixation may be released when the lifting cables are pulled up by the lifting devices.

### LIST OF REFERENCE NUMERALS

- 1:: floating wind power generation facility
- 2:: floating body
- 3:: tower
- 4:: nacelle
- 5:: hub
- 6:: blade
- 8:: base part
- 9:: underwater part
- 12:: rod part
- 13:: mass part
- 15:: tower lower portion
- 16:: tower upper portion
- 17:: leg
- 17a:: pin joint
- 20:: support member
- 23:: lifting cable
- 24:: lifting device
- X:: rotor axis
- Y:: tilting axis
- Z:: tower axis

## Claims

1. A construction method for a floating wind power generation facility provided with a floating body including a base part, a tower mounted on the base part, a nacelle mounted to an upper end portion of the tower, a hub mounted to the nacelle to be rotatable about a rotor axis, and multiple blades mounted to the hub, the construction method comprising:
a provisional arrangement step of assembling, on land, a provisional assembly which includes the base part and at least one provisionally mounted member constituting a part of the floating wind power generation facility, such that the provisionally mounted member is disposed at a position closer to the base part than a position at completion;
a launching step of launching the provisional assembly; and
a final arrangement step of, after the launching step, towing the floating wind power generation facility under construction to an installation position thereof and disposing the provisionally mounted member at the position at completion.

2. The construction method according to claim 1, wherein the floating body further includes an underwater part extending downward from the base part,
the tower includes a tower lower portion mounted on the base part and a tower upper portion, and
the provisionally mounted member includes a lower end portion of the underwater part, the tower upper portion, and/or the blades.

3. The construction method according to claim 2, wherein the provisional assembly assembled in the provisional arrangement step includes the base part, the underwater part, the tower lower portion, the tower upper portion, the nacelle, the hub, and the blades.

4. The construction method according to claim 3, wherein the provisionally mounted member includes the multiple blades,
the provisional arrangement step includes detachably mounting the multiple blades to the tower such that one end portions thereof to be mounted to the hub face upward and are offset from each other in a circumferential direction with respect to a tower axis, which is a central axis of the tower extending in an up-down direction, mounting the hub to the nacelle, and mounting the nacelle to an upper end portion of the tower upper portion via a support member configured to make the nacelle rotatable about the tower axis, and
the final arrangement step includes sequentially aligning and mounting each of the blades to a part of the hub where the blade is to be mounted by rotating the hub about the rotor axis and rotating the nacelle about the tower axis.

5. The construction method according to claim 4, wherein the support member is configured to make the nacelle tiltable about a tilting axis perpendicular to the tower axis and the rotor axis within a predetermined range.

6. The construction method according to claim 3, wherein the provisionally mounted member includes the lower end portion of the underwater part,
the provisional arrangement step includes temporarily fixing the underwater part to the base part, and
the final arrangement step includes releasing temporary fixation of the underwater part to the base part and moving the underwater part downward.

7. The construction method according to claim 6, wherein the tower lower portion includes at least three legs mounted on the base part and supporting the tower upper portion at upper end portions thereof,
the tower upper portion is disposed at a center of the at least three legs in plan view and is configured to be supported at a lower end portion thereof by the upper end portions of the at least three legs at completion,
the provisionally mounted member further includes the tower upper portion,
the provisional arrangement step includes placing the tower upper portion on an upper end portion of the underwater part such that an outer peripheral surface of an intermediate portion thereof in an up-down direction contacts or faces the upper end portions of the at least three legs, and
the final arrangement step includes moving the tower upper portion upward.

8. The construction method according to claim 7, wherein in the final arrangement step, towing of the floating wind power generation facility under construction to the installation position is performed after downward movement of the underwater part and before upward movement of the tower upper portion.

9. The construction method according to claim 7, wherein the provisional arrangement step includes mounting a temporary ring member extending in a circumferential direction with respect to a tower axis, which is a central axis of the tower extending in an up-down direction, to upper ends of the legs, disposing a lifting cable passing under the tower upper portion, and mounting a lifting device configured to pull up the lifting cable to the temporary ring member, and
upward movement of the tower upper portion in the final arrangement step is performed by pulling up the lifting cable supporting a bottom portion of the tower upper portion with the lifting device.

10. The construction method according to claim 6, wherein the underwater part includes a rod part extending downward from the base part and a mass part constituting the lower end portion of the underwater part, connected to a lower end portion of the rod part, and having a diameter larger than a diameter of the rod part.
